# EUROPÄISCHE PATENTANMELDUNG

(11) **EP 3 503 354 A1**
(43) Veröffentlichungstag der Anmeldung: **26.06.2019**
(21) Anmeldenummer: 17208914.6
(22) Anmeldetag: 20.12.2017
(51) Int. Cl.: H02K 3/34, H01F 27/32

(54) **ISOLIERUNG VON TEILLEITERN EINER DYNAMOELEKTRISCHEN MASCHINE**

(71) Anmelder: Siemens Aktiengesellschaft, 80333 München (DE)
(72) Erfinder: Brenner, Robin, 94036 Passau (DE); Lütke, Harry, 90409 Nürnberg (DE); Schönbauer, Norbert, 94072 Bad Füssing (DE)

(57) **Zusammenfassung**

Die Erfindung betrifft einen Stator (5) einer dynamoelektrischen Maschine (1) mit in Nuten (8) des Stators (5) angeordnetem Wicklungssystem (3), das pro Phase einzelne miteinander elektrisch kontaktierbare Spulen aufweist, wobei jeder Leiter (10) der Spule aus mehreren Teilleitern/Windungen aufgebaut ist, wobei diese Teilleiter (9) voneinander isoliert sind, in dem die Teilleiter (9) zu dem oder den benachbarten Teilleitern (9) ihres Leiters (10) der jeweiligen Nut (8) lediglich eine Isolationsschicht (15) aufweisen.

## Beschreibung

Die Erfindung betrifft die Isolierung von Teilleitern eines Stators einer dynamoelektrischen Maschine, eine dynamoelektrische Maschine mit einem derartigen Stator und ein Verfahren zur Herstellung eines Stators einer dynamoelektrischen Maschine.

Bei dynamoelektrischen Maschinen, beispielsweise Elektromotoren oder Generatoren, sind die Wicklungssysteme aus einzelnen Spulen aufgebaut. Die einzelnen Leiter der Spule sind dabei gegeneinander isoliert. Insbesondere müssen diese einzelnen Teilleiter eines Leiters eine sogenannte Windungsisolation aufweisen, die im Regelfall nur für vergleichsweise geringe Spannungen von maximal 80 V ausgelegt ist. Eine derartige Teilleiterisolation erfolgt beispielsweise durch mit auf Leiter aufgebrachtem Isolierlack und/oder (Polyester-)GlasFaser-Umspinnung.

Die Leiter sind erfahrungsgemäß aus Kupfer oder Aluminium hergestellt, wobei die Leiter mit Lack rundum isoliert sind und/oder (Polyester-)Glas-Faser-Umspinnung aufweisen. Alternativ kann der Leiter auch eine rundum-vorhandene Bandisolierung aufweisen.

Nachteilig dabei ist, dass bei Anordnung der Teilleiter der Leiter einer Spule in der Nut sich die Windungsisolationen gegenseitig in ihrer Dicke aufsummieren und sich somit der verfügbare Kupferfüllfaktor in der Nut reduziert.

Ausgehend davon liegt der Erfindung die Aufgabe zugrunde, ein Wicklungssystem für einen Stator bereitzustellen, das eine einfache Fertigung der Spulen bei gleichzeitiger Erhöhung des Kupferfüllfaktors in den Nuten des Stators gewährleistet.

Die Lösung der gestellten Aufgabe gelingt durch einen Stator einer dynamoelektrischen Maschine mit in Nuten des Stators angeordnetem Wicklungssystem, das pro Phase einzelne miteinander elektrisch kontaktierbare Spulen aufweist, wobei jeder Leiter der Spule aus mehreren Teilleitern/Windungen aufgebaut ist, wobei diese Teilleiter voneinander isoliert sind, in dem die Teilleiter zu dem oder den benachbarten Teilleitern ihres Leiters der jeweiligen Nut lediglich eine Isolationsschicht aufweisen.

Die Lösung der gestellten Aufgabe gelingt ebenso durch eine dynamoelektrische Maschine mit einem erfindungsgemäßen Stator.

Die Lösung der gestellten Aufgabe gelingt ebenso durch ein Verfahren zur Herstellung eines erfindungsgemäßen Stators einer dynamoelektrischen Maschine durch folgende Schritte:
- Bereitstellen eines Teilleiters,
- partielles Aufbringen einer Isolationsschicht auf den Teilleiter, insbesondere mit einer vorgebbaren Bedeckung des Querschnitts von 30 bis 70 %,
- Anordnen der Teilleiter eines Leiters derart, dass zwischen dem oder den benachbarten Teilleitern des Leiters lediglich eine Isolationsschicht vorhanden ist,
- Einsetzen der Teilleiter eines Leiters einer Spule in die Nut eines Stators einer dynamoelektrischen Maschine.

Erfindungsgemäß werden nun die einzelnen Teilleiter lediglich in Umfangsrichtung betrachtet partiell isoliert.

Es befindet sich somit zwischen den Teilleitern eines Leiters erfindungsgemäß nur eine Isolationsschicht - also Teilleiterisolationsschicht. Blanke Seiten eines angrenzenden Teilleiters liegen an isolierten Seiten der direkt benachbarten Teilleiter, so dass zwischen den einzelnen Teilleitern immer eine Mindestisolation gegeben ist.

Bei radial übereinander angeordneten Teilleitern in einer Nut eines Stators liegt somit jeweils eine blanke Seite eines zweiten Teilleiters auf einer Isolierung eines ersten Teilleiters usw., so dass auch hier zwischen den einzelnen Teilleitern immer eine Mindestisolation gegeben ist.

Das Wicklungssystem des Stators weist aber weiterhin grundsätzlich eine Nut- und Hauptisolation auf.

Vorteilhafterweise ist vor allem bei einer radialen Anordnung dieser Teilleiter in der Nut und bei einem rechteckigen Querschnitt dieser Teilleiter lediglich die Oberseite oder die Unterseite der Teilleiter mit einer Isolierung zu versehen. Die Isolierung der Teilleiter erfolgt als Bandisolierung oder als Lackisolierung.

Vorteilhaft ist es dabei, wenn diese Isolierung der Teilleiter noch über die angrenzenden Kantenradien dieser bedeckten Seiten der Teilleiter gezogen ist. Damit ist - im Querschnitt betrachtet - eine Seite des Teilleiters unbedeckt, eine Seite bedeckt und zwei Seiten jeweils zum Teil bedeckt.

Durch die erfindungsgemäße Ausgestaltung der Teilleiterisolierung reduziert sich das notwendige Volumen der Isolierung in der Nut bei gleichzeitiger Erhöhung des Kupferfüllfaktors oder Aluminiumfüllfaktors also der elektrisch verfügbare Leitungsquerschnitt.

Die Teilleiter weisen im Querschnitt betrachtet in der Nut, nur eine teilweise Bedeckung durch die Teilleiterisolierung auf. Die Teilbedeckung beträgt ca. 30 bis 70 % des Umfangs des Teilleiters - je nach Querschnittsform des Teilleiters.

Grundsätzlich weisen die Teilleiter einen vergleichsweise gut "stapelbaren" Querschnitt auf, es wird dabei vor allem eine im Wesentlichen rechteckförmige oder quadratische Querschnittsfläche der Teilleiter verwendet werden.

Dabei sind die Kanten der Teilleiter vorteilhafterweise abgerundet, um die Teilleiterisolation nicht zu beschädigen.

Innerhalb einer Nut sind die Teilleitern eines Leiters radial bzw. vertikal und/oder horizontal angeordnet. Als radial wird dabei die Anordnung der Teilleiter von einem Nutgrund in Richtung Luftspalt einer dynamoelektrischen Maschine verstanden. Während unter einer horizontalen Anordnung der Teilleiter eine bzgl. des Luftspaltes im Wesentlichen tangentiale Anordnung verstanden wird.

Bei Teilleitern mit rechteckiger Querschnittsform und insbesondere radialer Anordnung in einer Nut, bei der die Schmalseiten der Teilleiter aneinandergrenzen, wird die Teilbedeckung geringer sein, als bei einer Ausführung wo die Längsseiten eines rechteckförmigen Teilleiters über einander liegen.

Axial außerhalb der Nut, also im Bereich des Wickelkopfes kann die Bedeckung und/oder die Anordnung der Teilleiter des Leiters wie in der Nut ausgeführt sein.

Aufgrund des, je nach Maschinentyp ausgeführten Wickelkopfdesigns kann es notwendig sein im Wickelkopfbereich den Bedeckungsgrad zu ändern.

Die Isolation der Teilleiter ist Abdeckung vorzugsweise eine Folie, insbesondere aus Polyimid, die mit einem (Schmelz-) Kleber, z.B. FEP (Fluorethylen-Propylen)versehen ist und an den Teilleitern positioniert, insbesondere verklebt ist.

Die Abdeckung, insbesondere die Folie ist dabei koronabeständig ausgeführt, was beispielsweise durch dementsprechende Einlagerung geeigneter Partikel erfolgt.

Die Erfindung sowie vorteilhafte Ausgestaltungen der Erfindung werden anhand eines Ausführungsbeispiels näher erläutert. Darin zeigt:
- FIG 1: eine prinzipielle dynamoelektrische Maschine,
- FIG 2: einen Nutquerschnitt einer Hochspannungsisolierung,
- FIG 3: eine Spule mit einzelnen Teilleitern,
- FIG 4: eine Detaildarstellung eines Teilleiters,
- FIG 5: eine weitere Spule mit Teilleitern.

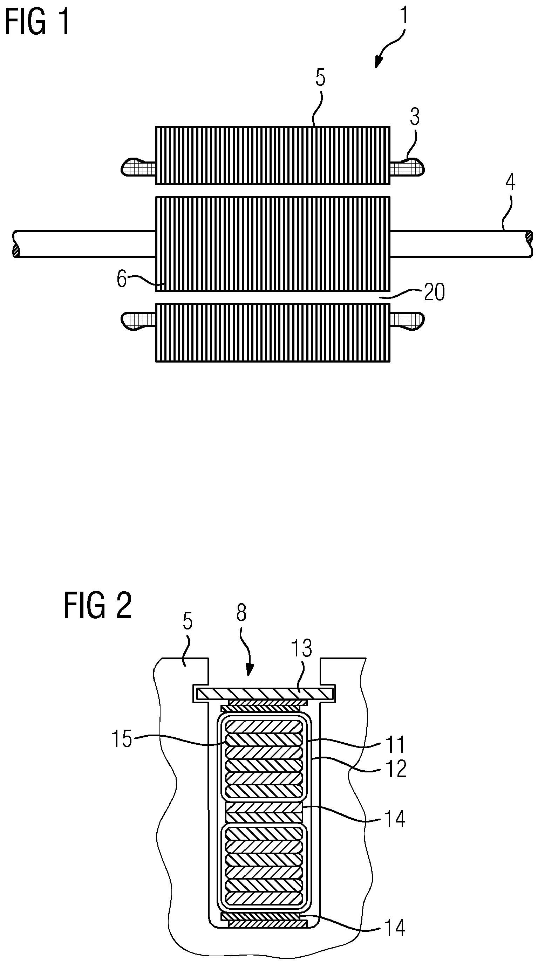

FIG 1 zeigt einen prinzipiellen Längsschnitt einer dynamoelektrischen Maschine 1 mit einem Stator 5, der durch einen Luftspalt 20 von einem Rotor 6 beabstandet ist, wobei der Rotor 6 mit einer Welle 4 drehfest verbunden ist und um eine Achse drehbar gelagert ist.

Dem Luftspalt 20 zugewandt befindet sich im Stator 5 ein in nicht näher dargestellten Nuten angeordnetes Wicklungssystem, das an den Stirnseiten des Stators 5 Wickelköpfe 3 ausbildet.

Ein bisher bekanntes, beispielhaft dargestelltes Wicklungssystem gemäß FIG 2 weist in einer Nut 8 Leiter 10 mit jeweils Teilleiter 9 auf, wobei in diesem Fall eine Zweischichtwicklung vorliegt. Jede Schicht weist somit einen Leiter 10 mit Teilleitern 9 auf, die von einem Nutfüllstoff 14 sowohl zum Nutgrund als auch zwischen den beiden Leitern 10, ebenso wie zwischen dem obersten Leiter und einem Nutverschlusskeil 13 angeordnet ist.

Jeder Teilleiter 9 weist dabei eine ihn umgebende Teilleiterisolierung 15 auf, die die vorhandene Windungsisolation übernimmt und die bei Hochspannungsmaschinen im Bereich von ca. 80 bis 100 V liegt. Jeder Leiter 10 ist von einer Hauptisolierung 11 umgeben, wobei das gesamte Wicklungssystem in dieser Nut 8 von einer Nutisolation 11 gegenüber dem Blechpaket des Stators 5 ebenfalls isoliert ist.

Durch den beschriebenen Aufbau weist jede Teilleiterisolierung 15 Schichtdicken auf, die sich über die radiale Höhe des Leiters 10 in der Nut 8 summieren und so zu einem reduzierten Kupferfüllfaktor des Wicklungssystems innerhalb der Nut führen.

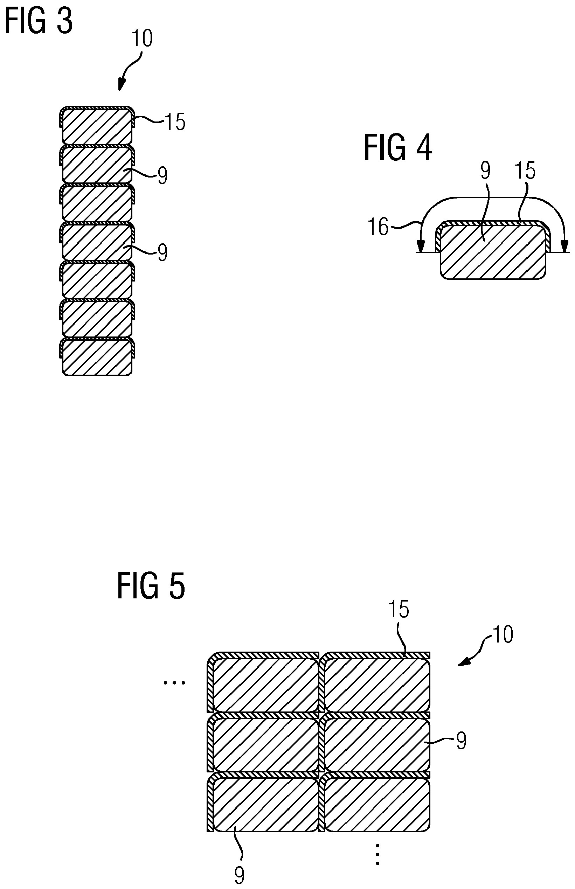

Erfindungsgemäß wird nunmehr gemäß FIG 3 bei einer Spule, die zumindest einen Leiter 10 aufweist und dessen Teilleiter 9 radial übereinander angeordnet sind, jeweils nur eine einseitige Teilleiterisolation 15 aufgebracht, so dass lediglich eine erforderliche Mindestisolation zwischen den einzelnen Teilleitern 9 vorhanden ist.

FIG 4 zeigt in einer näheren Darstellung einen im Wesentlichen rechteckförmig geformten Teilleiter 9, der im Querschnitt betrachtet eine teilweise Bedeckung durch eine Teilleiterisolierung 15 aufweist. Die Teilbedeckung beträgt ca. 30 bis 70 % des Umfangs des Teilleiters 9 - je nach Querschnittsform der Teilleiter 9.

Mit anderen Worten: bei Teilleitern 9 mit rechteckiger Querschnittsform und insbesondere radialer Anordnung in der Nut 8, bei der die Schmalseiten der Teilleiter 9 aneinandergrenzen, wird die Teilbedeckung geringer sein, als bei der Ausführung gemäß FIG 3, wo die Längsseiten der Teilleiter 9 aneinandergrenzen.

Die Isolation an den Teilleitern 9 ist vorzugsweise eine Folie, insbesondere aus Polyimid, die mit einem (Schmelz-) Kleber, z.B. FEP (Fluorethylen-Propylen)versehen ist und an den Teilleitern 9 positioniert, insbesondere verklebt ist.

Grundsätzlich weisen die Teilleiter 9 eine im Wesentlichen rechteckförmige oder quadratische Querschnittsfläche auf. Dabei sind die Kanten der Teilleiter 9 abgerundet, um die Teilleiterisolation 15 nicht zu beschädigen. Innerhalb einer Nut 8 sind die Teilleitern 9 eines Leiters 10 radial bzw. vertikal und/oder horizontal angeordnet.

FIG 5 zeigt in einer weiteren Ausführung einen Leiter 10 mit horizontal und vertikal angeordneten Teilleitern 9. Es sind dabei - im Querschnitt betrachtet - zwei Seiten des rechteckförmigen Teilleiters 9 mit einer Teilleiterisolierung 15 versehen. Die an diese Teilleiterisolierung 15 angrenzenden Teilleiter 9 weisen auf diesen Seiten erfindungsgemäß keine Teilleiterisolierung 15 auf. Es ist jedoch - wie beispielsweise in FIG 3 oder FIG 4 dargestellt - eine Überdeckung der angrenzenden Kanten des jeweiligen Teilleiters 9 möglich.

Der erfindungsgemäße Gedanke ist für Einschicht-, Zweischicht-, oder Mehrschichtwicklungen im Stator 5 geeignet.

## Patentansprüche

1. Stator (5) einer dynamoelektrischen Maschine (1) mit in Nuten (8) des Stators (5) angeordnetem Wicklungssystem (3), das pro Phase einzelne miteinander elektrisch kontaktierbare Spulen aufweist, wobei jeder Leiter (10) der Spule aus mehreren Teilleitern/Windungen aufgebaut ist, wobei diese Teilleiter (9) voneinander isoliert sind, in dem die Teilleiter (9) zu dem oder den benachbarten Teilleitern (9) ihres Leiters (10) der jeweiligen Nut (8) lediglich eine Isolationsschicht (15) aufweisen.

2. Stator (5) nach Anspruch 1, **dadurch gekennzeichnet, dass** die Teilleiter (9) eines Leiters (10) zumindest in der Nut (8) radial und/oder horizontal angeordnet sind.

3. Stator (5) nach Anspruch 1 oder 2, **dadurch ge**- **kennzeichnet**, dass die Teilleiter (9) einen im wesentlichen rechteckförmigen oder quadratischen Querschnitt aufweisen.

4. Stator (5) nach einem der vorhergehenden Ansprüche, **dadurch gekennzeichnet , dass** der Teilleiter (9) im Querschnitt betrachtet über die angrenzenden Kantenradien der durch die Isolationsschicht (15) bedeckten Seite isoliert ist.

5. Stator (5) nach einem der vorhergehenden Ansprüche, **dadurch gekennzeichnet , dass** die Bedeckung des Teilleiters (9) durch die Isolationsschicht im Querschnitt betrachtet zwischen 30 und 70 % liegt.

6. Dynamoelektrische Maschine (1) mit einem Stator (5) nach einem der vorhergehenden Ansprüche.

7. Verfahren zur Herstellung eines Stators (5) einer dynamoelektrischen Maschine (1) nach Anspruch 1, **gekennzeichnet durch** folgende Schritte:
- Bereitstellen eines Teilleiters (9),
- partielles Aufbringen einer Isolationsschicht (15) auf den Teilleiter (9), insbesondere mit einer vorgebbaren Bedeckung des Querschnitts von 30 bis 70 %,
- Anordnen der Teilleiter (9) eines Leiters (10) derart, dass zwischen dem oder den benachbarten Teilleitern (9) des Leiters (10) lediglich eine Isolationsschicht (15) vorhanden ist,
- Einsetzen der Teilleiter (9) eines Leiters (10) einer Spule in die Nut (8) eines Stators (5) einer dynamoelektrischen Maschine (1).
